# EUROPEAN PATENT APPLICATION

(11) **EP 4 506 393 A1**
(43) Date of publication of application: **12.02.2025**
(21) Application number: 23784648.0
(22) Date of filing: 24.03.2023
(51) Int. Cl.: C08G 77/20, C07F 7/12, C08G 77/38

(54) **METHOD FOR PRODUCING ONE-END-FUNCTIONAL ORGANOPOLYSILOXANE AND ONE-END-FUNCTIONAL ORGANOPOLYSILOXANE COMPOSITION**

(30) Priority: 05.04.2022 JP 2022062893
(71) Applicant: SHIN-ETSU CHEMICAL CO., LTD., Tokyo 1000005 (JP)
(72) Inventor: HASHIMOTO, Ryota, Annaka-shi, Gunma 379-0224 (JP); OKAMURA, Kaoru, Annaka-shi, Gunma 379-0224 (JP); TOYODA, Ken, Annaka-shi, Gunma 379-0195 (JP)
(74) Representative: Sonnenhauser, Thomas Martin
(86) International application number: PCT/JP2023/011797
(87) International publication number: WO 2023/195358

(57) **Abstract**

The present invention is a method for producing a one-terminal functional organopolysiloxane represented by the following general formula (1) using a cyclopolysiloxane having 3 to 5 silicon atoms as a raw material, 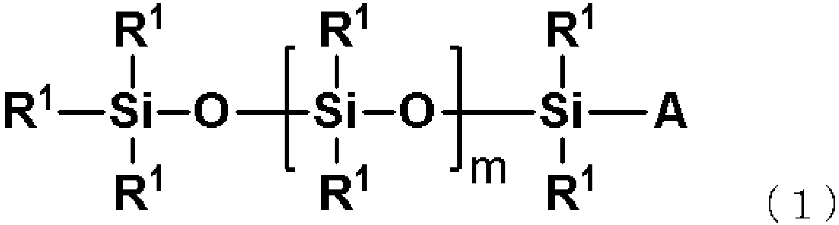 wherein R¹ independently represents an alkyl or a phenyl group, and A represents a hydrogen atom or a group represented by the following general formula (2) or (3), 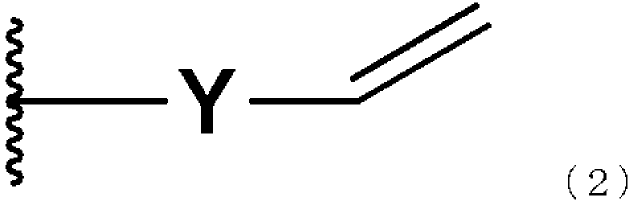 wherein Y represents a single bond or a divalent organic group, and a broken line represents an attachment, 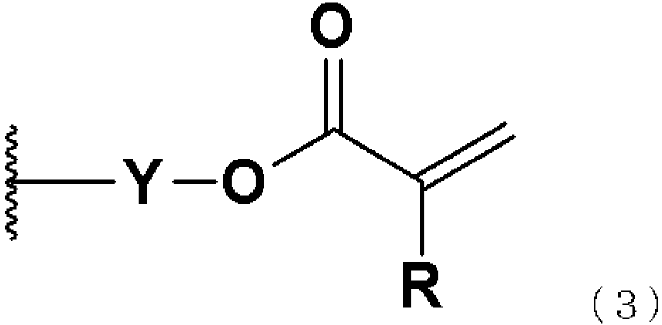 wherein R represents a hydrogen atom or a methyl group, and Y and a broken line are same as above,
the method including terminating a reaction at a time when a reaction conversion rate reaches 60 to 95%, the reaction conversion rate being determined using near-infrared spectrometry by analyzing a reaction liquid during the polymerization reaction. In production of the one-terminal functional organopolysiloxane, this method terminates the reaction at an optimal reaction conversion rate, and provided is a producing method for obtaining a highly pure one-terminal functional organopolysiloxane.

## Description

### TECHNICAL FIELD

The present invention relates to a method for producing a one-terminal functional organopolysiloxane and a one-terminal functional organopolysiloxane composition.

### BACKGROUND ART

Organopolysiloxanes having a functional group at one terminal of the molecule and graft polymers obtained from the organopolysiloxanes are used for a surface modifier for a polymer material, a cosmetic, a contact lens, a paint, a pressure sensitive adhesive, etc. This graft polymer can impart functions such as water repellency, oil repellency, antifouling property, heat resistance, oxygen permeability, wear resistance, and non-adhesiveness to these products.

These organopolysiloxanes having a functional group at one terminal are produced by a known method. Examples of known methods include ring-opening-polymerizing hexamethylcyclotrisiloxane by using lithium trimethylsilanolate as a polymerization initiator, and terminating the reaction with 3-(2-methacryloxyethoxy)propyldimethylchlorosilane to synthesize an organopolysiloxane having a methacryl group at one terminal.

Another known method includes ring-opening-polymerizing hexamethylcyclotrisiloxane by using trimethylsilanol or 3-methacryloxypropyldimethylsilanol as an initiator in the presence of a pentadentate silicon catalyst, and then respectively terminating the reaction with 3-methacryloxypropyldimethylchlorosilane or trimethylchlorosilane to synthesize an organopolysiloxane having a (meth)acryl group at one terminal.

However, when the organopolysiloxane having a functional group at one terminal is produced by these methods, an organopolysiloxane having functional groups at both terminals may be generated as a byproduct. Particularly, when an amount of hexamethylcyclotrisiloxane contained in the reaction system decreases, the polymerized linear organopolysiloxane are reacted with each other to tend to generate the organopolysiloxane having a functional group at both terminals. Since the organopolysiloxane having functional groups at both terminals causes a crosslinking reaction to be incorporated inside the polymer, such an organopolysiloxane becomes a factor to lead to quality deterioration.

From the above reason, in the production of the organopolysiloxane having a functional group at one terminal, it is needed to precisely analyze a conversion rate of hexamethylcyclotrisiloxane and terminate the reaction at an optimal conversion rate. In the conventional manner, a sample collected from the reaction liquid is analyzed by gas chromatography (hereinafter, GC), and the reaction is terminated based on its analysis value. The analysis by GC, however, requires time of several tens of minutes for analyzing one sample, and thereby a time lag occurs between collecting the sample and obtaining the analysis value. In addition, when the sample contains a non-volatile polymer, such a sample may deteriorate the GC device body, and thereby pretreatment such as extraction is needed to further require time for analyzing the conversion rate at present. There has been a problem of difficulty in termination of the reaction speedy and precisely.

Patent Document 1 proposes a method in which, in production of an ABS-based graft polymer, a monomer conversion rate is monitored by using Raman spectrometry. This method can reduce the analysis time for the monomer conversion rate compared with GC and can terminate the reaction more precisely. However, there have been problems of a risk of decomposition of the sample and safety in operation depending on the compound structure due to use of laser light.

### CITATION LIST

### PATENT LITERATURE

Patent Document 1: JP 2005-507455 A

### SUMMARY OF INVENTION

### TECHNICAL PROBLEM

The present invention has been made in view of the above circumstance. An object of the present invention is to provide a producing method for obtaining a highly pure one-terminal functional organopolysiloxane by terminating a reaction at an optimal reaction conversion rate in production of the one-terminal functional organopolysiloxane.

### SOLUTION TO PROBLEM

To solve the above problems, the present invention provides a method for producing a one-terminal functional organopolysiloxane represented by the following general formula (1) with a polymerization reaction using a cyclopolysiloxane having 3 to 5 silicon atoms as a raw material, 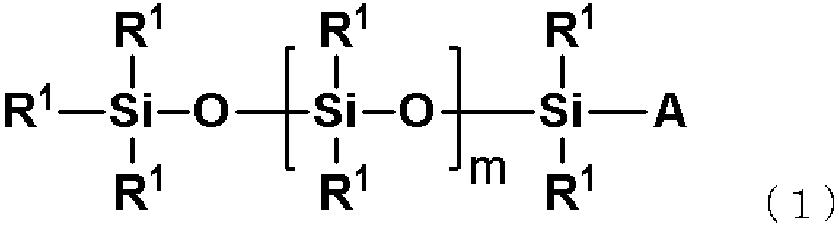
wherein R¹ independently represents an alkyl group having 1 to 6 carbon atoms or a phenyl group, A represents a hydrogen atom or a group represented by the following general formula (2) or (3), and "m" represents an integer satisfying 3 to 300, 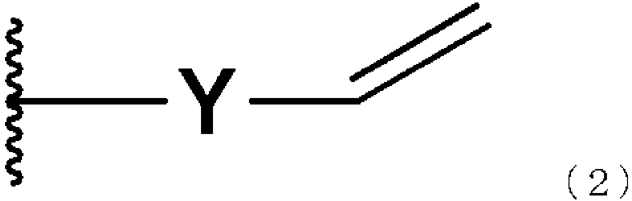
wherein Y represents a single bond or a divalent organic group having 1 to 5 carbon atoms, and a broken line represents an attachment, 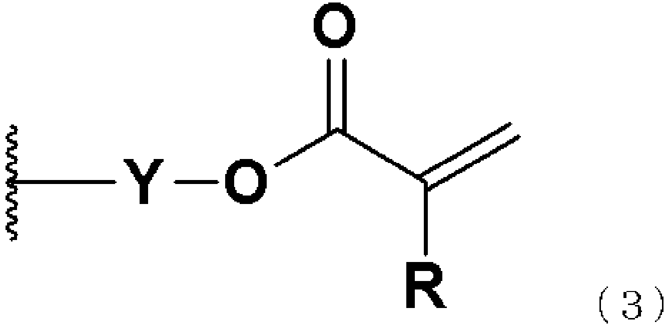
wherein R represents a hydrogen atom or a methyl group, and Y and a broken line are same as above,
the method including:
   terminating the reaction at a time when a reaction conversion rate reaches 60 to 95%, the reaction conversion rate being determined using near-infrared spectrometry by analyzing a reaction liquid during the polymerization reaction.

Such a method for producing a one-terminal functional organopolysiloxane can yield the highly pure one-terminal functional organopolysiloxane.

In an aspect of the present invention, the Y in the raw material used preferably represents a divalent organic group represented by any one of the following formula (4) or (5), 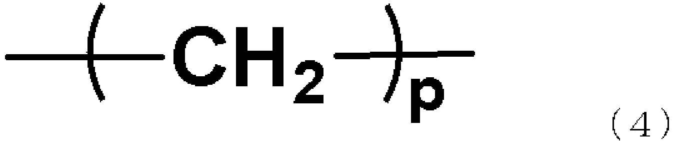
wherein "p" represents an integer of 1 to 5, 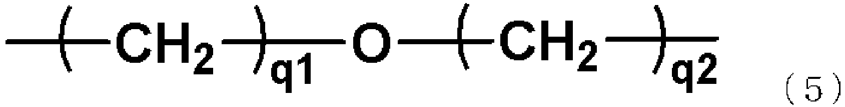
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5, a terminal of an alkylene group in a bracket with q1 is an attachment, and a terminal of an alkylene group in a bracket with q2 is bonded to a vinyl group in the general formula (2) or a (meth)acryloyloxy group in the general formula (3).

Use of such a material can yield the product suitable as the one-terminal functional organopolysiloxane.

In an aspect of the present invention, the polymerization reaction is preferably living polymerization.

The above reaction being the living polymerization can yield the one-terminal functional organopolysiloxane by the producing method of the present invention at a better purity.

In an aspect of the present invention, a method for analyzing the reaction liquid during the polymerization reaction is preferably a method with on-line or in-line analysis.

Use of such a method can precisely grasp the reaction conversion rate.

In an aspect of the present invention, the reaction is preferably terminated so that a content of a both-terminal functional organopolysiloxane represented by the following general formula (6) being an impurity is 0.01 to 2 parts by mass relative to 100 parts by mass of the one-terminal functional organopolysiloxane, 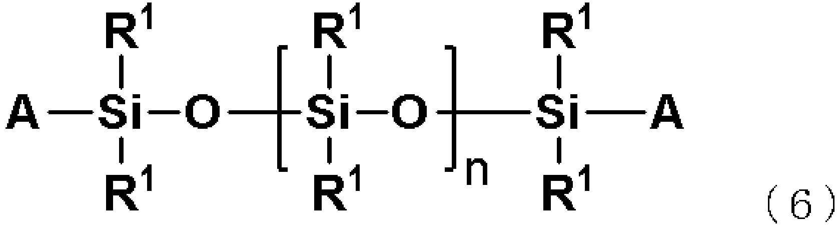 wherein R¹ and A are same as above, and "n" represents an integer satisfying 0 to 300.

By terminating the reaction as above, the highly pure one-terminal functional organopolysiloxane can be obtained.

In addition, the present invention provides a one-terminal functional organopolysiloxane composition including:
(a) a one-terminal functional organopolysiloxane represented by the following general formula (1): 100 parts by mass; and
(b) a both-terminal functional organopolysiloxane represented by the following general formula (6): 0.01 to 2 parts by mass, 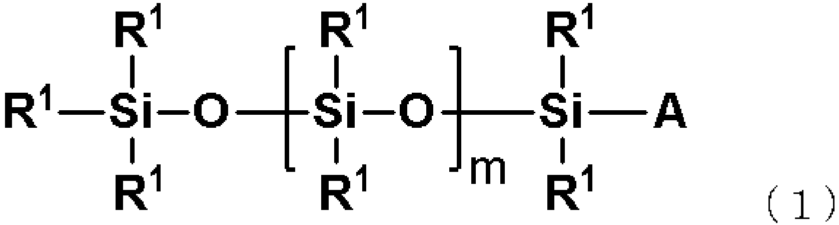
   wherein R¹ independently represents an alkyl group having 1 to 6 carbon atoms or a phenyl group, A represents a hydrogen atom or a group represented by the following general formula (2) or (3), and "m" represents an integer satisfying 3 to 300, 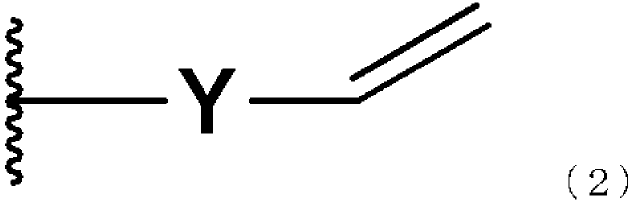
   wherein Y represents a single bond or a divalent organic group having 1 to 5 carbon atoms, and a broken line represents an attachment, 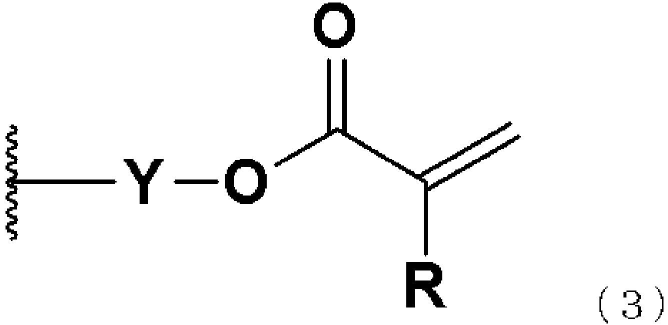
   wherein R represents a hydrogen atom or a methyl group, and Y and a broken line are same as above, 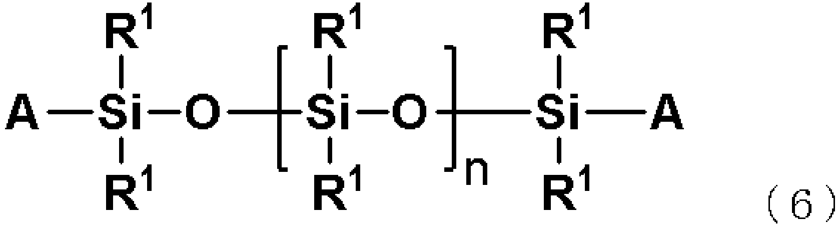
   wherein R¹ and A are same as above, and "n" represents an integer satisfying 0 to 300.

The composition obtained by the method for producing a one-terminal functional organopolysiloxane of the present invention is a one-terminal functional organopolysiloxane composition containing such a highly pure one-terminal functional organopolysiloxane.

In an aspect of the present invention, the Y preferably represents a divalent organic group represented by any one of the following formula (4) or (5), 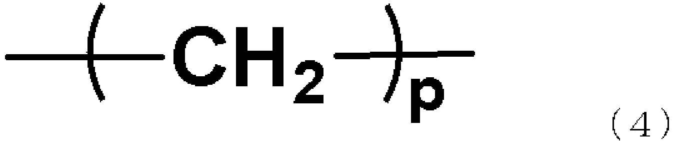
wherein "p" represents an integer of 1 to 5, 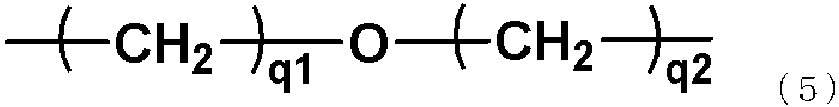
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5, a terminal of an alkylene group in a bracket with q1 is an attachment, and a terminal of an alkylene group in a bracket with q2 is bonded to a vinyl group in the general formula (2) or a (meth)acryloyloxy group in the general formula (3).

Such a composition is suitable as the one-terminal functional organopolysiloxane.

### ADVANTAGEOUS EFFECTS OF INVENTION

The producing method of the present invention can yield the highly pure one-terminal functional organopolysiloxane by analyzing the reaction conversion rate of the cyclopolysiloxane by using a near-infrared spectrometer and by terminating the reaction at the optimal reaction conversion rate. The composition obtained by the producing method of the present invention is the highly pure one-terminal functional organopolysiloxane.

### DESCRIPTION OF EMBODIMENTS

In the production of the one-terminal functional organopolysiloxane, there has been a demand for a producing method for obtaining a highly pure one-terminal functional organopolysiloxane.

The present inventors have made earnest study to achieve the above object, and consequently found that, in the production of the one-terminal functional organopolysiloxane, the reaction can be terminated speedy and precisely by analyzing the reaction conversion rate by using a near-infrared spectrometer. This finding has led to completion of the present invention.

Specifically, the present invention is a method for producing a one-terminal functional organopolysiloxane represented by the following general formula (1) with a polymerization reaction using a cyclopolysiloxane having 3 to 5 silicon atoms as a raw material, 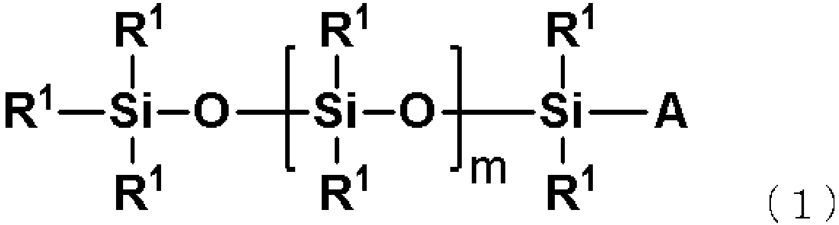
wherein R¹ independently represents an alkyl group having 1 to 6 carbon atoms or a phenyl group, A represents a hydrogen atom or a group represented by the following general formula (2) or (3), and "m" represents an integer satisfying 3 to 300, 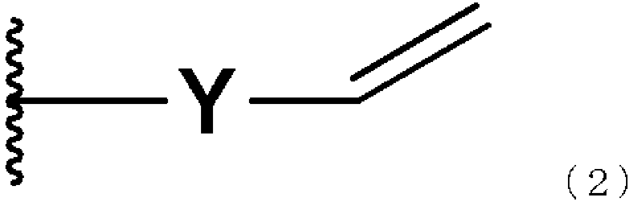
wherein Y represents a single bond or a divalent organic group having 1 to 5 carbon atoms, and a broken line represents an attachment, 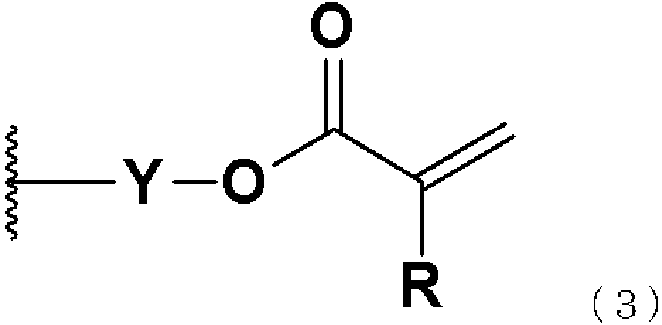
wherein R represents a hydrogen atom or a methyl group, and Y and a broken line are same as above,
the method including:
   terminating the reaction at a time when a reaction conversion rate reaches 60 to 95%, the reaction conversion rate being determined using near-infrared spectrometry by analyzing a reaction liquid during the polymerization reaction.

In addition, the present invention is a one-terminal functional organopolysiloxane composition including:
(a) a one-terminal functional organopolysiloxane represented by the following general formula (1): 100 parts by mass; and
(b) a both-terminal functional organopolysiloxane represented by the following general formula (6): 0.01 to 2 parts by mass, 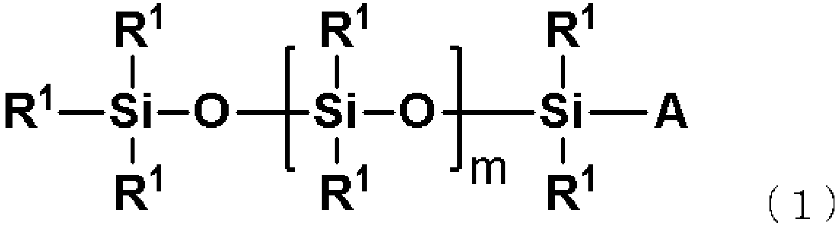
   wherein R¹ independently represents an alkyl group having 1 to 6 carbon atoms or a phenyl group, A represents a hydrogen atom or a group represented by the following general formula (2) or (3), and "m" represents an integer satisfying 3 to 300, 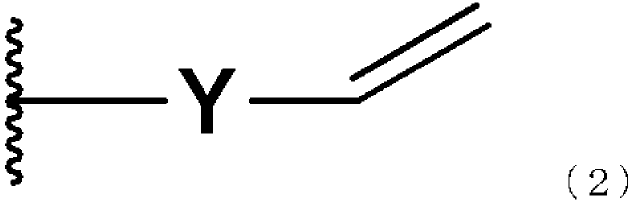
   wherein Y represents a single bond or a divalent organic group having 1 to 5 carbon atoms, and a broken line represents an attachment, 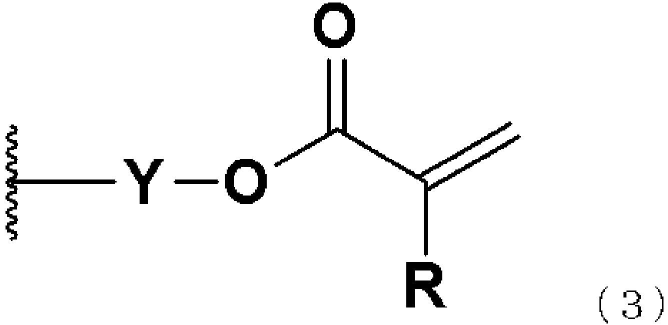
   wherein R represents a hydrogen atom or a methyl group, and Y and a broken line are same as above, 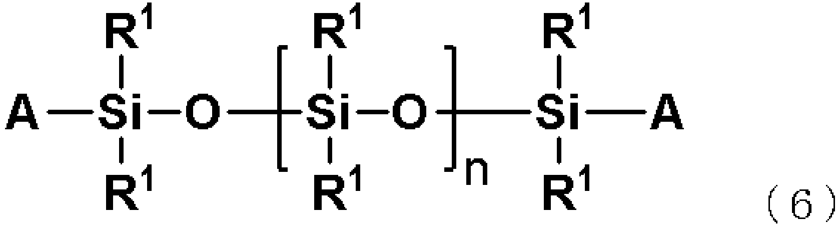
   wherein R¹ and A are same as above, and "n" represents an integer satisfying 0 to 300.

Hereinafter, the present invention will be specifically described.

The present invention is a method for producing a one-terminal functional organopolysiloxane represented by the following general formula (1) with a polymerization reaction using a cyclopolysiloxane having 3 to 5 silicon atoms as a raw material.

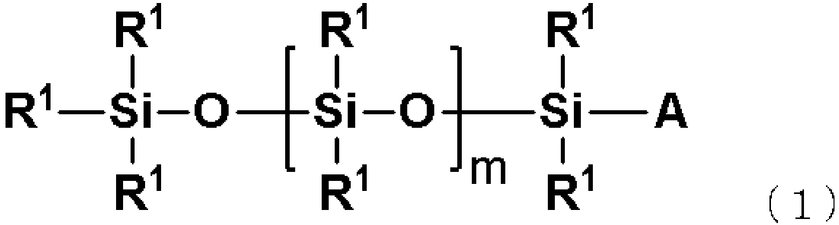

In the general formula (1), R¹ independently represents an alkyl group having 1 to 6 carbon atoms or a phenyl group, A represents a hydrogen atom or a group represented by the following general formula (2) or (3), and "m" represents an integer satisfying 3 to 300.

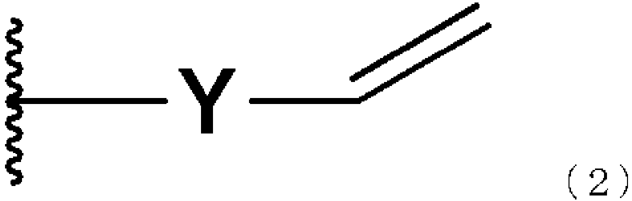

In the general formula (2), Y represents a single bond or a divalent organic group having 1 to 5 carbon atoms, and a broken line represents an attachment.

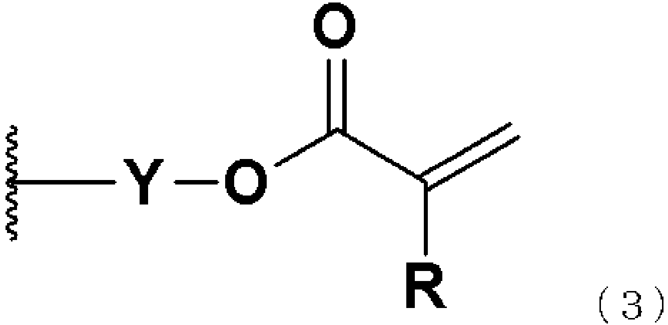

In the general formula (3), R represents a hydrogen atom or a methyl group, and Y and a broken line are same as above.

Examples of the cyclopolysiloxane having 3 to 5 silicon atoms include hexamethylcyclotrisiloxane, octamethylcyclotetrasiloxane, decamethylcyclopentasiloxane, hexaethylcyclotrisiloxane, octaethylcyclotetrasiloxane, decaethylcyclopentasiloxane, hexaphenylcyclotrisiloxane, octaphenylcyclotetrasiloxane, decaphenylcyclopentasiloxane, diphenyltetramethylcyclotrisiloxane, tetraphenyldimethylcyclotrisiloxane, diphenylhexamethylcyclotetrasiloxane, tetraphenyltetramethylcyclotetrasiloxane, hexaphenyldimethylcyclotetrasiloxane, diphenyloctamethylcyclopentasiloxane, tetraphenylhexamethylcyclopentasiloxane, hexaphenyltetramethylcyclopentasiloxane, and octaphenyldimethylcyclopentasiloxane. Particularly, hexamethylcyclotrisiloxane, octamethylcyclotetrasiloxane, hexaphenylcyclotrisiloxane, octaphenylcyclotetrasiloxane, or diphenyltetramethylcyclotrisiloxane is preferably used.

In the general formula (1), R¹ independently represents an alkyl group having 1 to 6 carbon atoms or a phenyl group. Specific examples thereof include: alkyl groups such as a methyl group, an ethyl group, a propyl group, a butyl group, a pentyl group, and a hexyl group; and a phenyl group.

"m" represents an integer of 3 to 300, and preferably an integer of 3 to 80.

In the general formula (2) or (3), Y represents a single bond or a divalent organic group having 1 to 5 carbon atoms. Y preferably represents a divalent organic group represented by the following formula (4) or (5), 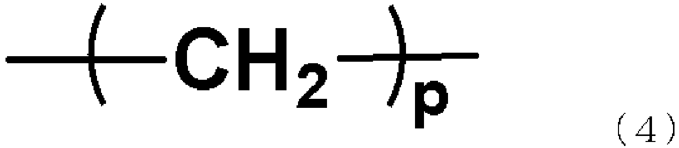
wherein "p" represents an integer of 1 to 5, 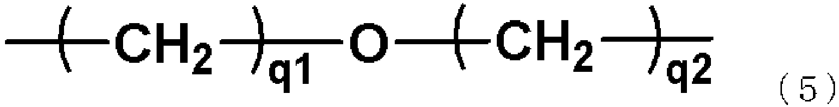
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5. A terminal of an alkylene group in a bracket with q1 is an attachment, and a terminal of an alkylene group in a bracket with q2 is bonded to a vinyl group in the general formula (2) or a (meth)acryloyloxy group in the general formula (3).

Specific examples thereof include: alkylene groups such as a methylene group, an ethylene group, a propylene group, a butylene group, and a pentylene group; or oxyalkylene groups and alkyleneoxyalkylene groups having an ether bond such as an oxyethylene group and an oxypropylene group.

Such Y yields a suitable one-terminal functional organopolysiloxane.

In an aspect of the present invention, the polymerization reaction is preferably living polymerization. The above reaction being the living polymerization can yield the one-terminal functional organopolysiloxane by the producing method of the present invention at a better purity.

Examples of the initiator used in the present polymerization reaction include: lithium trialkylsilanolates such as lithium trimethylsilanolate, lithium triethylsilanolate, lithium tripropylsilanolate, and lithium tributylsilanolate; and alkyllithiums such as methyllithium, ethyllithium, n-butyllithium, sec-butyllithium, and tert-butyllithium. Lithium trimethylsilanolate or n-butyllithium is particularly preferable.

Examples of a terminal-blocking agent used in this case include chlorosilane derivatives such as dimethylchlorosilane, dimethylvinylchrolosilane, 3-methacryloxypropyldimethylchlorosilane, and acryloxypropyldimethylchlorosilane.

As another method, the polymerization may be performed by using a silanol as an initiator in the presence of a pentadentate silicon catalyst. Examples of the initiator include trimethylsilanol, dimethylsilanol, dimethylvinylsilanol, and 3-methacryloxypropyldimethylsilanol. Examples of the pentadentate silicon catalyst include compounds represented by the following formula (7), 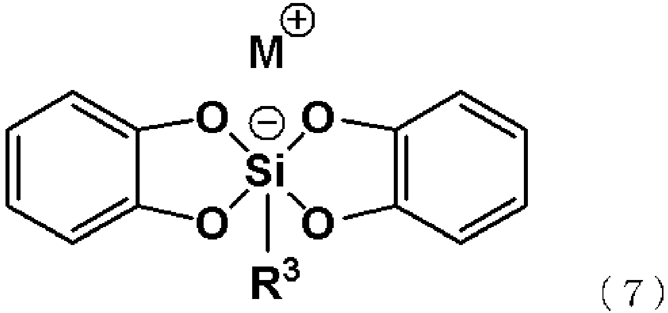 wherein R³ represents a methyl group or a phenyl group, and M represents Li, Na, K, NH₄, or C₆H₅CH₂N(CH₃)₃.

As the terminal-blocking agent used in this case, examples of a terminal-blocking agent for blocking a functional terminal include chlorosilane derivative such as dimethylchlorosilane, dimethylvinylchlorosilane, 3-methacryloxypropyldimethylchlorosilane, and acryloxypropyldimethylchlorosilane, and examples of a terminal-blocking agent for blocking a non-functional terminal include chlorosilane derivatives such as trimethylchlorosilane.

In the living polymerization reaction using the initiator and the catalyst as described above, contamination with water may fail to proceed the desired reaction. Thus, the reaction is preferably managed so as not to cause contamination with water from the raw material and the atmosphere.

These reactions are performed in the presence of an appropriate solvent. As the solvent, preferably used are: a mixed solvent in which a polar solvent such as dimethylformamide, dimethylacetamide, tetrahydrofuran, dimethyl sulfoxide, and diglyme as a polymerization accelerator is added into a non-polar solvent such as toluene, benzene, xylene, and n-hexane; or the above polar solvent.

The reaction temperature is preferably -20°C to 150°C, and particularly preferably 0°C to 40°C. The reaction time, which depends on the reaction temperature, is preferably about 1 to 30 hours when the reaction temperature is 0°C to 40°C. The reaction time is further preferably 3 to 20 hours, and particularly preferably 4 to 8 hours. The reaction time may be 15 to 20 hours under some conditions.

After the reaction is terminated, it is preferable that ion-exchanged water be added for water washing in order to purify the target product from the reaction solution, and the organic layer be further heated under a reduced pressure to remove the reaction solvent, an unreacted raw material, and a low-molecular-weight impurity.

In this reaction, an organopolysiloxane having functional groups at both terminals represented by the following general formula (6), which is an impurity, may be generated as a byproduct. Particularly, when an amount of the cyclopolysiloxane contained in the reaction system decreases, the polymerized linear organopolysiloxane is reacted with each other to tend to generate the organopolysiloxane having functional groups at both terminals. Therefore, it is essential to monitor a conversion rate of the cyclopolysiloxane and terminate the reaction at an appropriate time. A low conversion rate of the cyclopolysiloxane decreases the yield, and a high conversion rate of the cyclopolysiloxane increases the amount of the both-terminal functional organopolysiloxane generated. The conversion rate of the cyclopolysiloxane at the reaction termination is 60% to 95%, and preferably 70% to 85%. 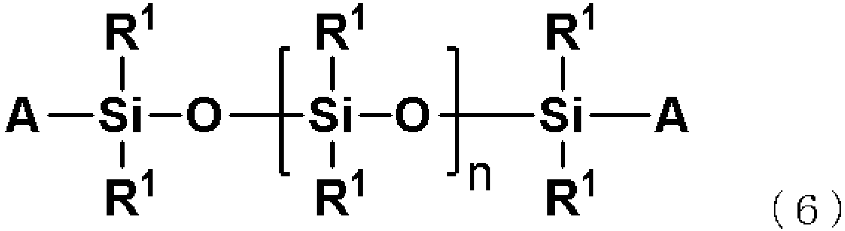 In the general formula (6), R¹ and A are same as above, and "n" represents an integer satisfying 0 to 300.

"n" represents an integer of 0 to 300, and preferably an integer of 0 to 80.

If a large amount of the both-terminal functional organopolysiloxane is contained relative to the one-terminal functional organopolysiloxane, the both-terminal functional organopolysiloxane may serve as a crosslinking agent to lead to quality deterioration, such as gelation, in copolymerization with another radical polymerizable monomer for obtaining a graft polymer. Thus, the reaction is preferably terminated so that the content of the both-terminal functional organopolysiloxane is 2 parts by mass or less, particularly preferably 1 part by mass or less, relative to 100 parts by mass of the one-terminal functional organopolysiloxane. The reaction termination as above can yield the highly pure one-terminal functional organopolysiloxane. A lower limit of the content of the both-terminal functional organopolysiloxane is not particularly limited, and may be 0.01 part by mass.

The proportion of the both-terminal functional organopolysiloxane contained in the one-terminal functional organopolysiloxane can be analyzed by using gas chromatography (GC) or liquid chromatography.

A polymerization degree of the polymer obtained in this reaction can be freely controlled by a mole ratio between the used initiator and the cyclopolysiloxane consumed by the polymerization.

In the producing method of the present invention, the reaction is terminated at a time when an optimal reaction conversion rate of the cyclopolysiloxane is detected by analyzing the reaction liquid in the polymerization reaction using a near-infrared spectrometer (near-infrared spectrometry).

As the near-infrared spectrometry, three types of in-line analysis, on-line analysis, and off-line analysis can be used. In the present description, the term "in-line analysis" refers to a method of direct measurement in a reaction vessel. The term "on-line analysis" refers to a method of providing a circulation line with a reaction vessel, measuring a reaction liquid at another location, and then returning the reaction liquid to the reaction vessel. The term "off-line analysis" refers to a method of collecting a sample from a reaction vessel and measuring the sample at another location.

To precisely grasp the reaction conversion rate, the in-line analysis or the on-line analysis is preferable. The above analysis methods eliminate manual operation such as sample collection to hardly cause an error due to the operator. In addition, the above analysis methods can perform measurement with prevention of contact with external atmosphere, and thereby can be a more suitable measurement method for the living polymerization etc., which have importance of moisture management in the reaction system, for example.

Since radiation and light-receiving portions of near-infrared ray and the near-infrared spectrometer can be connected via an optical fiber cable, the installation site has no distance limit.

The near-infrared spectrometer is not particularly limited, and a commercially available measurement device may be used. For example, a desktop-installation NR801JL-model Fourier transformation near-infrared spectrometer (Yokogawa Electric Corporation) etc. may be used. For determining the reaction conversion rate with the near-infrared spectrometer, a spectrum is measured with the near-infrared spectrometer by using a sample subjected in advance to analysis of the reaction conversion rate (conversion rate) of hexamethylcyclotrisiloxane by GC, variation at the measurement point of each wavenumber is subjected to multivariate analysis, and a calibration curve is produced to determine a relationship between the spectrum and the reaction conversion rate.

Accordingly, the method for producing a one-terminal functional organopolysiloxane of the present invention can yield the highly pure one-terminal functional organopolysiloxane.

The composition produced by the producing method of the present invention containing the one-terminal functional organopolysiloxane and the impurity has a feature of reduction of the content of the both-terminal functional organopolysiloxane being the impurity. Specifically, the present invention can provide a one-terminal functional organopolysiloxane composition including:
(a) a one-terminal functional organopolysiloxane represented by the following general formula (1): 100 parts by mass; and
(b) a both-terminal functional organopolysiloxane represented by the following general formula (6): 0.01 to 2 parts by mass, 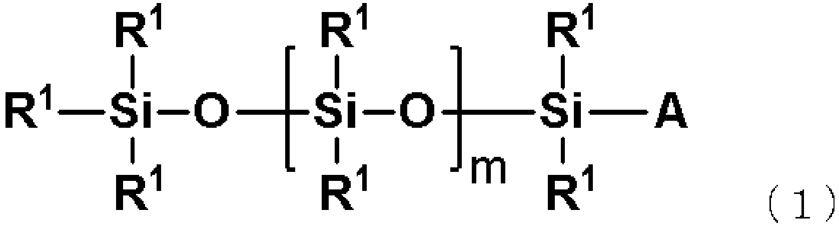
   wherein R¹ independently represents an alkyl group having 1 to 6 carbon atoms or a phenyl group, A represents a hydrogen atom or a group represented by the following general formula (2) or (3), and "m" represents an integer satisfying 3 to 300, 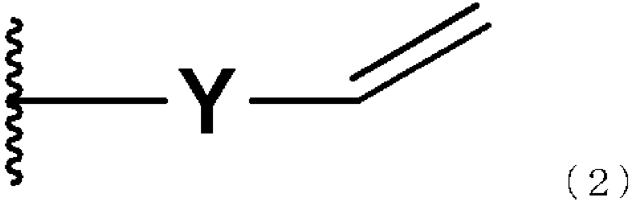
   wherein Y represents a single bond or a divalent organic group having 1 to 5 carbon atoms, and a broken line represents an attachment, 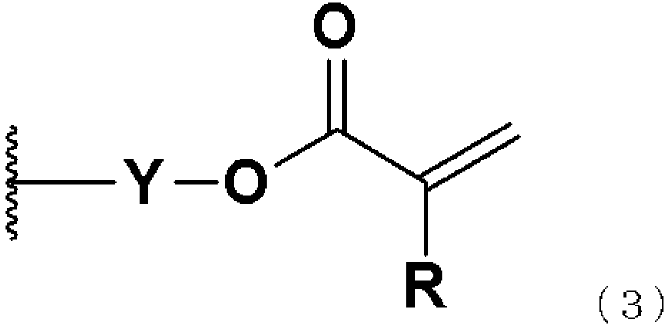
   wherein R represents a hydrogen atom or a methyl group, and Y and a broken line are same as above, 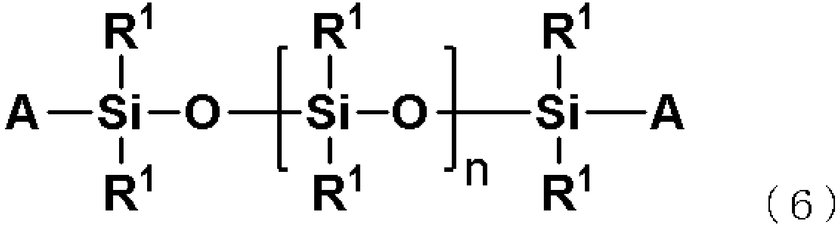
   wherein R¹ and A are same as above, and "n" represents an integer satisfying 0 to 300.

The composition obtained by the method for producing a one-terminal functional organopolysiloxane of the present invention is a one-terminal functional organopolysiloxane composition containing a highly pure one-terminal functional organopolysiloxane.

In an aspect of the present invention, Y in this one-terminal functional organopolysiloxane composition preferably represents a divalent organic group represented by the following formula (4) or the following formula (5), 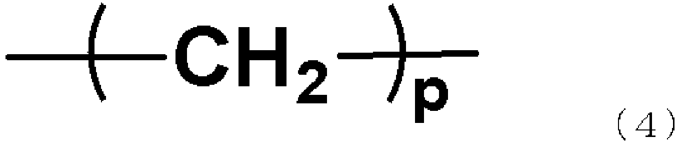
wherein "p" represents an integer of 1 to 5, 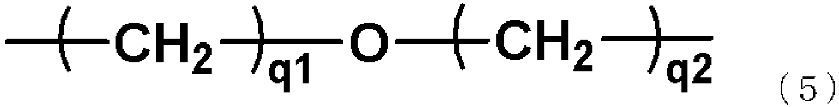
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5, a terminal of an alkylene group in a bracket with q1 is an attachment, and a terminal of an alkylene group in a bracket with q2 is bonded to a vinyl group in the general formula (2) or a (meth)acryloyloxy group in the general formula (3).

Such Y yields a suitable one-terminal functional organopolysiloxane.

### EXAMPLE

Hereinafter, the present invention will be described in further detail with Examples, but the present invention is not limited thereby.

GC measurement was performed with the following device under the following condition.

### Measurement Condition

Device: Capillary gas chromatograph (Agilent 7890A)
Column: J&W DURABOND DB-5MS (MEGABORE, inner diameter: 0.53 mm, length: 30 m, film thickness: 1.0 µm)
Column temperature: 50°C, raised at 10°C/min, held at 300°C for 125 minutes, total 150 minutes
Injection port temperature: 270°C
Carrier gas: He (5 mL/min)
Detector: FID (300°C)
Injection amount: 1 µL
Injection method: Split method (split ratio 1/10)
Sample preparation: dilution with hexane for 5 wt%

Near-infrared spectrometry was performed with the following device under the following Condition.

### Measurement condition

Device: Desktop-installation NR801JL-model Fourier transformation near-infrared spectrometer (Yokogawa Electric Corporation)
Analyzed wavenumbers: 4,800 to 5,600 cm⁻¹, 6,000 to 6,100 cm⁻¹, 6,300 to 7,400 cm⁻¹, and 8,100 to 8,800 cm⁻¹ Analysis temperature: 20°C

A conversion rate of hexamethylcyclotrisiloxane in a reaction liquid was calculated based on a calibration curve produced by the following method. A spectrum was measured with the near-infrared spectrometer by using a sample subjected in advance to analysis of the conversion rate of hexamethylcyclotrisiloxane by GC, and variation at the measurement point of each wavenumber was subjected to multivariate analysis to produce the calibration curve.

### Example 1

Into a four-neck separable flask equipped with a stirring device, a thermometer, a reflux cooling tube, and radiation and light-receiving portions for near-infrared ray, 265.0 g (1.19 mol) of hexamethylcyclotrisiloxane and 265.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 74% (4 hours later from the beginning of the polymerization), 68.8 g (0.31 mol) of 3-methacryloxypropyldimethylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 232 g of a product mainly containing a one-terminal methacryl-functionalized organopolysiloxane (pale yellow clear liquid, yield: 66%).

The product obtained above was analyzed by GC to find that a both-terminal methacryl-functionalized organopolysiloxane was contained at 0.24 parts by mass relative to 100 parts by mass of the one-terminal methacryl-functionalized organopolysiloxane A.

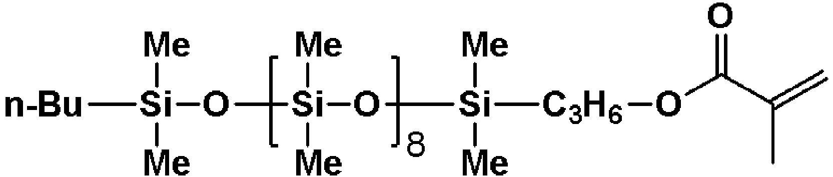

### One-terminal methacryl-functionalized organopolysiloxane A

### Example 2

Into a four-neck separable flask equipped with a stirring device, a thermometer, a reflux cooling tube, and radiation and light-receiving portions for near-infrared ray, 248.0 g (1.12 mol) of hexamethylcyclotrisiloxane and 248.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 85% (6 hours later from the beginning of the polymerization), 68.8 g (0.31 mol) of 3-methacryloxypropyldimethylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 245 g of a product mainly containing a one-terminal methacryl-functionalized organopolysiloxane (pale yellow clear liquid, yield: 73%).

The product obtained above was analyzed by GC to find that a both-terminal methacryl-functionalized organopolysiloxane was contained at 0.35 parts by mass relative to 100 parts by mass of the one-terminal methacryl-functionalized organopolysiloxane B.

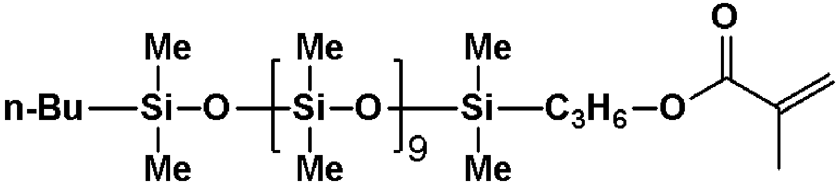

### One-terminal methacryl-functionalized organopolysiloxane B

### Example 3

Into a four-neck separable flask equipped with a stirring device, a thermometer, a reflux cooling tube, and radiation and light-receiving portions for near-infrared ray, 255.0 g (1.15 mol) of hexamethylcyclotrisiloxane and 255.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 92% (8 hours later from the beginning of the polymerization), 68.8 g (0.31 mol) of 3-methacryloxypropyldimethylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 271 g of a product mainly containing a one-terminal methacryl-functionalized organopolysiloxane (pale yellow clear liquid, yield: 79%).

The product obtained above was analyzed by GC to find that a both-terminal methacryl-functionalized organopolysiloxane was contained at 0.77 parts by mass relative to 100 parts by mass of the one-terminal methacryl-functionalized organopolysiloxane C.

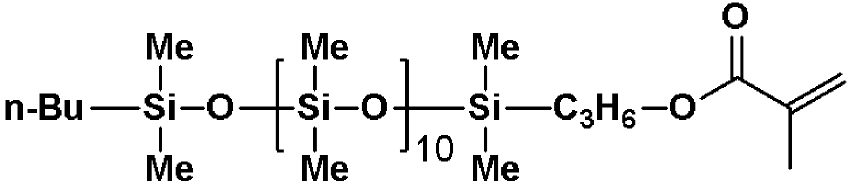

### One terminal methacryl-functionalized organopolysiloxane C

### Example 4

Into a four-neck separable flask equipped with a stirring device, a thermometer, a reflux cooling tube, and radiation and light-receiving portions for near-infrared ray, 252.0 g (1.13 mol) of hexamethylcyclotrisiloxane and 252.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 90% (7.5 hours later from the beginning of the polymerization), 37.4 g (0.31 mol) of dimethylvinylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 238 g of a product mainly containing a one-terminal vinyl-functionalized organopolysiloxane (pale yellow clear liquid, yield: 77%).

The product obtained above was analyzed by GC to find that a both-terminal vinyl-functionalized organopolysiloxane was contained at 0.58 parts by mass relative to 100 parts by mass of the one-terminal vinyl-functionalized organopolysiloxane D.

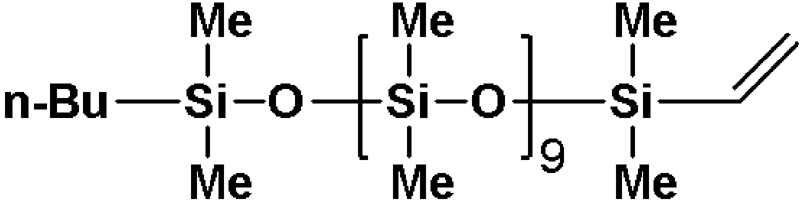

### One-terminal vinyl-functionalized organopolysiloxane D

### Example 5

Into a four-neck separable flask equipped with a stirring device, a thermometer, a reflux cooling tube, and radiation and light-receiving portions for near-infrared ray, 239.0 g (1.07 mol) of hexamethylcyclotrisiloxane and 239.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 79% (5 hours later from the beginning of the polymerization), 29.3 g (0.31 mol) of dimethylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 200 g of a product mainly containing a one-terminal hydrosilyl-functionalized organopolysiloxane (pale yellow clear liquid, yield: 70%).

The product obtained above was analyzed by GC to find that a both-terminal hydrosilyl-functionalized organopolysiloxane was contained at 0.29 parts by mass relative to 100 parts by mass of the one-terminal hydrosilyl-functionalized organopolysiloxane E.

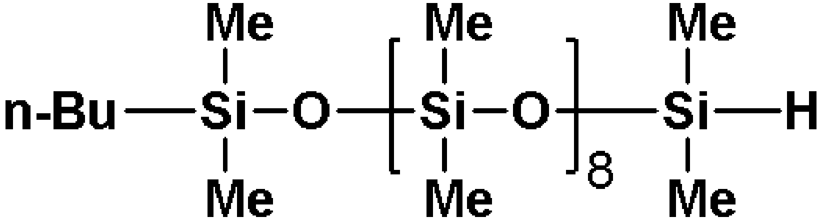

### One-terminal hydrosilyl-functionalized organopolysiloxane E

### Comparative Example 1

Into a four-neck separable flask equipped with a stirring device, a thermometer, a reflux cooling tube, and radiation and light-receiving portions for near-infrared ray, 240.0 g (1.08 mol) of hexamethylcyclotrisiloxane and 240.0 g of toluene were fed. The inside of the flask is nitrogen-substituted, cooled to 20°C, 126.8 g of a hexane solution of n-butyllithium (concentration: 15%) (n-butyllithium: 0.30 mol) was added, and the mixture was stirred for 1 hour. Into the flask, 24.8 g of dimethylformamide was added, and polymerization was performed at 20°C. By using the near-infrared spectrometer, the conversion rate of hexamethylcyclotrisiloxane from the beginning of the polymerization was measured. When the conversion rate of hexamethylcyclotrisiloxane reached 98% (10 hours later from the beginning of the polymerization), 68.8 g (0.31 mol) of 3-methacryloxypropyldimethylchlorosilane was added, and the mixture was stirred for 1 hour to terminate the polymerization. Thereafter, 53.3 g of ion-exchanged water was added into the reaction solution for water washing repeatedly three times. The organic layer was subjected to pressure reduction under a condition at 100°C and 10 mmHg, and toluene, hexane, and a low-boiling-point oligomer such as unreacted hexamethylcyclotrisiloxane were distilled off to obtain 277 g of a product mainly containing a one-terminal methacryl-functionalized organopolysiloxane (pale yellow clear liquid, yield: 85%).

The product obtained above was analyzed by GC to find that a both-terminal methacryl-functionalized organopolysiloxane was contained at 2.12 parts by mass relative to 100 parts by mass of the one-terminal methacryl-functionalized organopolysiloxane F.

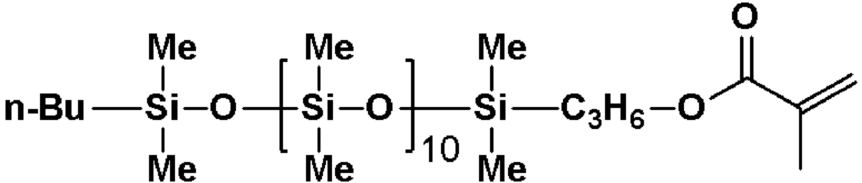

### One-terminal methacryl-functionalized organopolysiloxane F.

The following Table 1 shows the one-terminal functional organopolysiloxane (one-terminal functionalized product), the both-terminal functional organopolysiloxane (both-terminal functionalized product), and the conversion rate and the yield of hexamethylcyclotrisiloxane of the obtained products in Examples 1 to 5 and Comparative Example 1.

**[Table 1]**

| | One-terminal functionalized product (parts by mass) | Both-terminal functionalized product (parts by mass) | Convertion rate of hexamethylcyclotrisiloxane (%) | Yield (%) |
|---|---|---|---|---|
| Example 1 | 100 | 0.24 | 74 | 66 |
| Example 2 | 100 | 0.35 | 85 | 73 |
| Example 3 | 100 | 0.77 | 92 | 79 |
| Example 4 | 100 | 0.58 | 90 | 77 |
| Example 5 | 100 | 0.29 | 79 | 70 |
| Comparative Example 1 | 100 | 2.12 | 98 | 85 |

| | | | | |
|---|---|---|---|---|
| * The yield was calculated with the following calculation formula. Yield = (Yield quantity / (Hexamethylcyclotrisiloxane + Pure content of n-Butyllithium + Chlorosilane derivative)) × 100 | | | | |

As obvious from the results in Table 1, the one-terminal functional organopolysiloxane obtained by the producing method of the present invention reduces the content of the both-terminal functional organopolysiloxane.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A method for producing a one-terminal functional organopolysiloxane represented by the following general formula (1) with a polymerization reaction using a cyclopolysiloxane having 3 to 5 silicon atoms as a raw material, 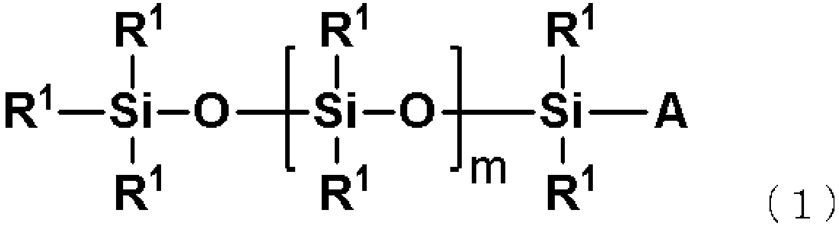
wherein R¹ independently represents an alkyl group having 1 to 6 carbon atoms or a phenyl group, A represents a hydrogen atom or a group represented by the following general formula (2) or (3), and "m" represents an integer satisfying 3 to 300, 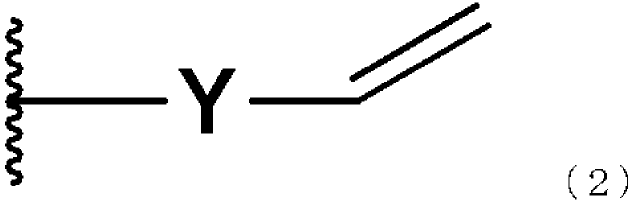
wherein Y represents a single bond or a divalent organic group having 1 to 5 carbon atoms, and a broken line represents an attachment, 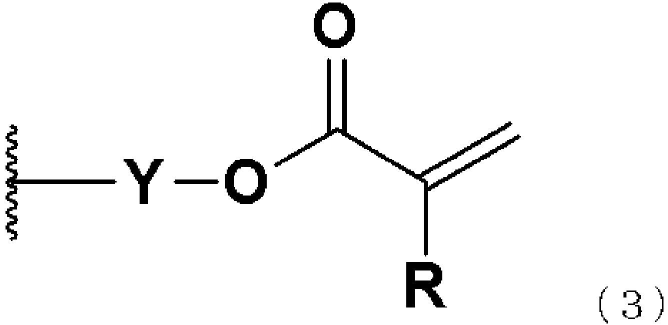
wherein R represents a hydrogen atom or a methyl group, and Y and a broken line are same as above,
the method comprising:
terminating the reaction at a time when a reaction conversion rate reaches 60 to 95%, the reaction conversion rate being determined using near-infrared spectrometry by analyzing a reaction liquid during the polymerization reaction.

2. The method for producing a one-terminal functional organopolysiloxane according to claim 1, wherein the Y in the raw material used represents a divalent organic group represented by any one of the following formula (4) or (5), 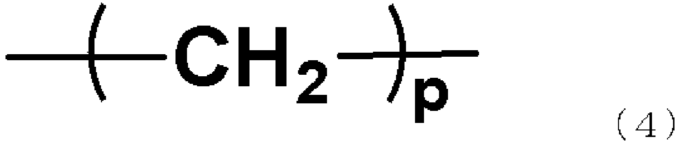
wherein "p" represents an integer of 1 to 5, 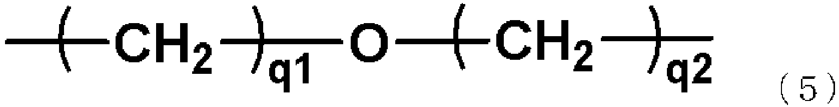
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5, a terminal of an alkylene group in a bracket with q1 is an attachment, and a terminal of an alkylene group in a bracket with q2 is bonded to a vinyl group in the general formula (2) or a (meth)acryloyloxy group in the general formula (3).

3. The method for producing a one-terminal functional organopolysiloxane according to claim 1, wherein the polymerization reaction is living polymerization.

4. The method for producing a one-terminal functional organopolysiloxane according to claim 1, wherein a method for analyzing the reaction liquid during the polymerization reaction is a method with on-line or in-line analysis.

5. The method for producing a one-terminal functional organopolysiloxane according to claim 1, wherein the reaction is terminated so that a content of a both-terminal functional organopolysiloxane represented by the following general formula (6) being an impurity is 0.01 to 2 parts by mass relative to 100 parts by mass of the one-terminal functional organopolysiloxane, 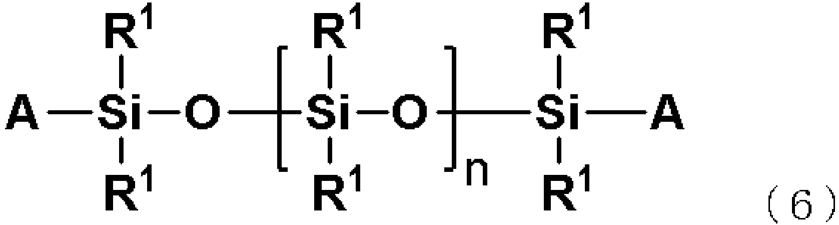 wherein R¹ and A are same as above, and "n" represents an integer satisfying 0 to 300.

6. A one-terminal functional organopolysiloxane composition, comprising:
(a) a one-terminal functional organopolysiloxane represented by the following general formula (1): 100 parts by mass; and
(b) a both-terminal functional organopolysiloxane represented by the following general formula (6): 0.01 to 2 parts by mass, 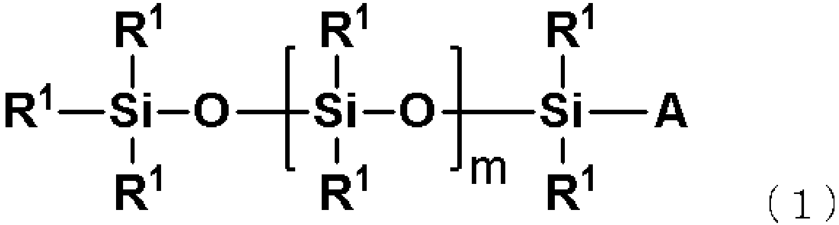
wherein R¹ independently represents an alkyl group having 1 to 6 carbon atoms or a phenyl group, A represents a hydrogen atom or a group represented by the following general formula (2) or (3), and "m" represents an integer satisfying 3 to 300, 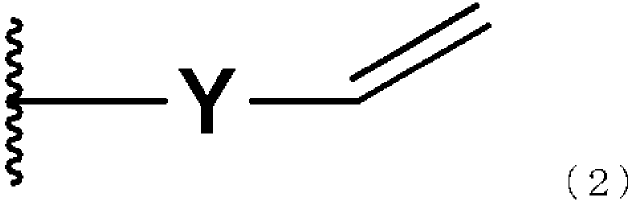
wherein Y represents a single bond or a divalent organic group having 1 to 5 carbon atoms, and a broken line represents an attachment, 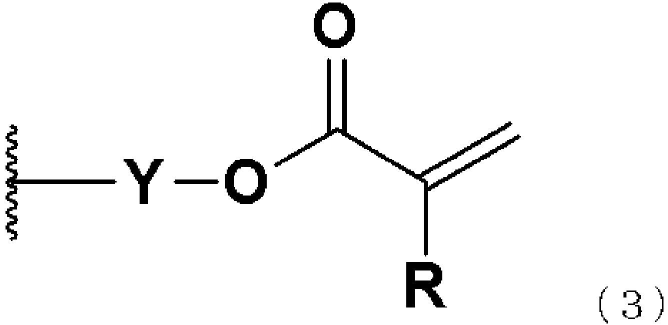
wherein R represents a hydrogen atom or a methyl group, and Y and a broken line are same as above, 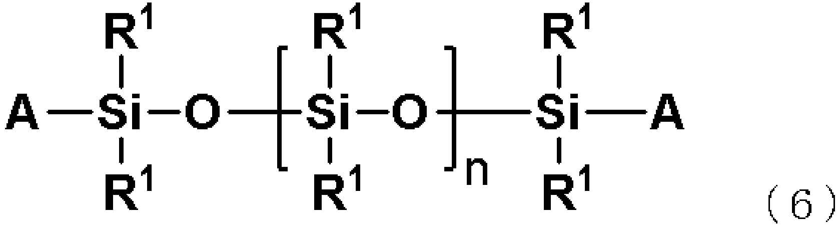
wherein R¹ and A are same as above, and "n" represents an integer satisfying 0 to 300.

7. The one-terminal functional organopolysiloxane composition according to claim 6, wherein the Y represents a divalent organic group represented by any one of the following formula (4) or (5), 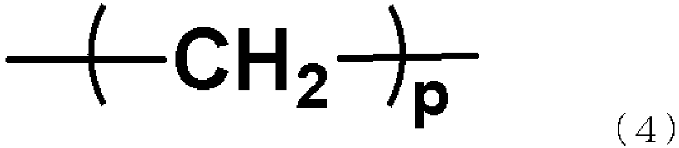
wherein "p" represents an integer of 1 to 5, 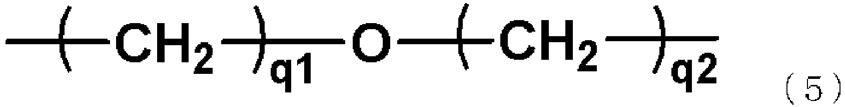
wherein q1 represents an integer satisfying 0 ≤ q1 ≤ 5, q2 represents an integer satisfying 0 < q2 ≤ 5, provided that q1 and q2 represent integers satisfying 1 ≤ q1+q2 ≤ 5, a terminal of an alkylene group in a bracket with q1 is an attachment, and a terminal of an alkylene group in a bracket with q2 is bonded to a vinyl group in the general formula (2) or a (meth)acryloyloxy group in the general formula (3).
